# EUROPÄISCHE PATENTSCHRIFT

(11) **EP 1 107 585 B1**
(45) Veröffentlichungstag und Bekanntmachung des Hinweises auf die Patenterteilung: **25.10.2006**
(21) Anmeldenummer: 00123113.3
(22) Anmeldetag: 25.10.2000
(51) Int. Cl.: H04N 5/445, H04N 5/44

(54) **Verfahren zur Darstellung von Information an einer TV-Fernbedienung sowie eine TV-Fernbedienung zur Durchführung des Verfahrens**
Method for displaying information on a TV remote control and TV remote control unit for carrying out the method
Méthode d'affichage d'information sur une télécommande de télévision et télécommande de télévision associée

(30) Priorität: 01.12.1999 DE 19957764
(43) Veröffentlichungstag der Anmeldung: 13.06.2001
(73) Patentinhaber: Deutsche Telekom AG, 53113 Bonn (DE)
(72) Erfinder: Laepple, Sven-E., 60528 Frankfurt (DE); Hertzel, Silvio, 53639 Königswinter (DE)

(56) Entgegenhaltungen:
- EP-A- 0 849 943
- DE-A- 19 519 132
- US-A- 5 410 326
- US-A- 5 537 107
- PATENT ABSTRACTS OF JAPAN Bd. 1998, Nr. 03, 27. Februar 1998 (1998-02-27) & JP 09 298677 A (MATSUSHITA ELECTRIC IND CO LTD), 18. November 1997 (1997-11-18)

## Beschreibung

Die Erfindung betrifft ein Verfahren zur Darstellung von Information an einer TV-Fernbedienung sowie eine TV-Fernbedienung zur Durchführung des Verfahrens.

Bei der Vielfalt der heutigen insbesondere über Satellit zu empfangenen Fernsehprogramme oder -kanäle ist die Verwendung einer TV-Fernbedienung fast unerläßlich. Der angebotenen Informationsvielfalt wird durch die Geräte auch dadurch Rechnung getragen, dass auf dem Bildschirm mehrere Programme gleichzeitig, beispielsweise in Form eines "Bild im Bild" angezeigt werden können. Dieses Feature heutiger Fernseher ist jedoch auf den Bedarf eines einzelnen Zuschauers zugeschnitten. Wenn mehrere Personen fernsehen, ist es in der Regel störend, wenn ein Einzelner sich beispielsweise informieren möchte, was gerade auf anderen Programmen läuft und deshalb entweder mittels der "Bild im Bild"-Technik mehrere Kanäle gleichzeitig anschauen oder gar durch die Programme zappen möchte. Das individuelle Informationsbedürfnis des TV-Fernbedienungshalters führt somit zu einer erheblichen Ablenkung und Störung der anderen im Raum befindlichen Fernsehzuschauer.

Aus der US 5,537,107 ist eine Fernbedienung für Videovorrichtungen, insbesondere für Vorrichtungen zur Videoaufnahme und -überarbeitung wie eine Videokamera oder ein Videobandaufnahmegerät, offenbart. Um die Auswirkungen von Anwendungen der Bedienfunktionen der TV-Fernbedienung einfach ohne Verwendung eines Fernsehers darstellen zu können, umfasst diese eine LCD-Anzeige, auf welcher das modifizierte Videobild oder der bearbeitete Videofilm dargestellt werden kann. Zusätzlich wird nach dem Stand der Technik als Information die vom Anwender auf einer Tastatur der TV-Fernbedienung eingegebenen Befehle alphanummerisch auf dem LCD-Bildschirm angezeigt.

Aus der DE 195 19 132 A ist ein System aus einem Fernsehempfänger und einer Fernbedieneinheit bekannt. Fernsehsignale und Videotextdaten werden im Fernsehempfänger getrennt der Bildröhre des Fernsehempfängers bzw. der Fernbedieneinheit zugeführt. Darüber hinaus kann über die Bildwiedergabeeinheit der Fernbedieneinheit auch das kleine Bild für eine Bild in Bild-Wiedergabe ausgenutzt werden. Ferner weist die Fernbedieneinheit einen Videotext-Dekoder auf, der geträgerte Videotextsignale demodulieren kann, um die entsprechenden Videotextsignale für den Wiedergabebildschirm der Fernbedieneinheit zu liefern. Die Fernbedieneinheit ist jedoch nicht in der Lage, Videosignale, die sowohl ein TV-Programm als auch Zusatzinformationen enthalten, zu empfangen und aus den Videosignalen die Zusatzinformationen wiederzugewinnen, um sie an der Fernbedieneinheit darzustellen.

Aufgabe der Erfindung ist es, ein Verfahren bereitzustellen, mit welchem individuellen Infomationsbedürfnissen beim gemeinschaftlichen Fernsehen Rechnung getragen werden kann, ohne dass die anderen Zuschauer gestört werden.

Dies wird schon durch ein Verfahren zur Darstellung von Informationen an einer TV-Fernbedienung mit den Verfahrensschritten des Anspruchs 1, durch eine TV-Fernbedienung gemäß Anspruch 3 sowie ein TV-System nach Anspruch 7 erreicht Vorteilhafte Weiterbildungen sind Gegenstand der abhängigen Ansprüche.

Erfindungsgemäß wird ein an der TV-Fernbedienung darzustellendes TV-Programm ausgewählt, von der Fernbedienung empfangen und von dieser dargestellt. Durch den Einsatz einer Videosignalempfangseinrichtung, einer zugeordneten Ausgabeeinrichtung, mit welcher die empfangenen Informationen ausgegeben werden können, sowie einer TV-Programm-Auswahleinrichtung, welche zur Auswahl zumindest eines von der TV-Fernbedienung zu empfangenen TV-Programms dient, wird die TV-Fernbedienung so erweitert, dass sie als zusätzliche Informationszentrale für einen Fernsehzuschauer dienen kann, wobei die entsprechende Verwendung nicht zu einer Störung der anderen Fernsehzuschauer führt. Das multifunktionale Gerät ist prinzipiell mit allen Leitungs- oder leitungslosen Kommunikationsverbindungen zum Fernseher ausführbar, beispielsweise mit einer Infrarot-, einer Ultraschall- oder Funkverbindung.

Um Fernsehsignale mit der TV-Fernbedienung darstellen zu können, ist die Signalempfangseinrichtung zum Empfang von Videosignalen ausgebildet und weist eine der Ausgabeeinrichtung zugeordnete TV-Programm-Auswahleinrichtung auf, wobei die Ausgabeeinrichtung der TV-Fernbedienung einen Bildschirm zum Darstellen der in den Videosignalen codierten Bilder umfasst. Auf dem Bildschirm kann ein vom Fernseher empfangener Fernsehkanal oder ein empfangenes Fernsehprogramm oder auch Zusatzinformation angezeigt werden, welche gleichzeitig mit den diesem ausgewählten Programm zugeordneten Videosignalen empfangen werden kann.

Dabei wird diese Zusatzinformation vom Anwender an der Fernbedienung ausgewählt und von der Fernbedienung über Videosignale empfangen. Die im Videosignal enthaltene Zusatzinformation wird decodiert und kann nachfolgend an der TV-Fernbedienung dargestellt werden.

Erfindungsgemäß sind unter dem Ausdruck "Videosignale" alle Signale zu verstehen, welche zur Erzeugung zumindest eines Bildes auf einem Bildschirm geeignet sind, oder mit welchen sich ein derartiges Bild berechnen läßt.

Die empfangene Zusatzinformation kann gleichzeitig mit dem Fernsehprogramm oder auch getrennt als alphanumerische oder Bildinformation auf dem Bildschirm der TV-Fernbedienung dargestellt werden. Diese weitere Information kann beispielsweise Information über ein Fernsehprogramm umfassen. Dies betrifft z.B. die durch den Dienst WebTV^{®} angebotene Dienstleistung, bei welcher, wie oben stehend beschrieben, zusätzlich zu den Videosignalen zum Darstellen eines ausgewählten Fernsehkanals Zusatzinformation übertragen wird.

Als weiterer möglicher mittels der Fernsehsignale an die TV-Fernbedienung übertragbarer Informationsdienst ist auch ein durch die Programmwahl festgelegter oder unabhängig vom laufenden Fernsehprogramm auswählbarer Zugang zum Internet, insbesondere zum WWW (World Wide Web), zu sehen. Um ein bequemes Surfen im Internet zu ermöglichen, kann die Eingabeeinrichtung der TV-Fernbedienung eine Teileinrichtung zur Steuerung eines auf dem Bildschirm angezeigten Cursors, beispielsweise einen Trackball oder ein Trackpad, und eine Teileinrichtung zur Eingabe von alphanummerischen Zeichen aufweisen.

Um die Funktionalität der erfindungsgemäßen TV-Fernbedienung noch weiter zu erhöhen, kann die Ausgabeeinrichtung einen Lautsprecher oder eine Lautsprecherbuchse zum Anschluß eines Kopfhörers umfassen. Somit kann ein Verwender der erfindungsgemäßen TV-Fernbedienung den gesamten Informationsgehalt der an die TV-Fernbedienung gesendeten Signale erfassen, wobei durch den Anschluss eines Kopfhörers an die TV-Fernbedienung eine Störung von anderen Fernsehzuschauern vollkommen ausgeschlossen wird.

Die Empfangseinrichtung der TV-Fernbedienung ist nicht auf den Empfang von Signalen einer zugeordneten Sendeeinrichtung am Fernseher beschränkt. In einer vorteilhaften Ausführungsform der Erfindung kann die Zusatzinformation durch das Absenden einer Anforderung über ein Kommunikationsnetz zu einer Zieleinrichtung ausgewählt und von dieser empfangen werden.
Zu diesem Zweck weist die TV-Fernbedienung weiterhin eine Empfangseinrichtung zum Empfang von Signalen aus einem Telekommunikationsnetz und entsprechend eine Sendeeinrichtung zum Senden in ein Kommunikationsnetz, beispielsweise ein Telekommunikationsnetz, auf. Damit kann die Zusatzinformation selbst oder die Anforderung dieser Information über das Kommunikationsnetz zumindest teilweise empfangen bzw. abgesetzt werden. Das beispielhafte Telekommunikationsnetz kann dabei sowohl ein Mobilfunknetz als auch ein Festnetz sein. Erfindungsgemäß können die Signale dabei entweder direkt aus dem Telekommunikationsnetz empfangen oder in dieses gesendet werden, oder indirekt über eine Basisstation in der Nähe des Fernsehers, die eine Anbindung an das Telekommunikationsnetz bereitstellt.

Die Erfindung wird im Folgenden durch das Beschreiben einiger Ausführungsformen unter Zugrundelegen der Zeichnungen erläutert, wobei
- Fig. 1: eine erste Ausführungsform der erfindungsgemäßen TV-Fernbedienung und
- Fig. 2: eine weitere Ausführungsform der TV-Fernbedienung jeweils in einem Blockschaltbild zeigt.

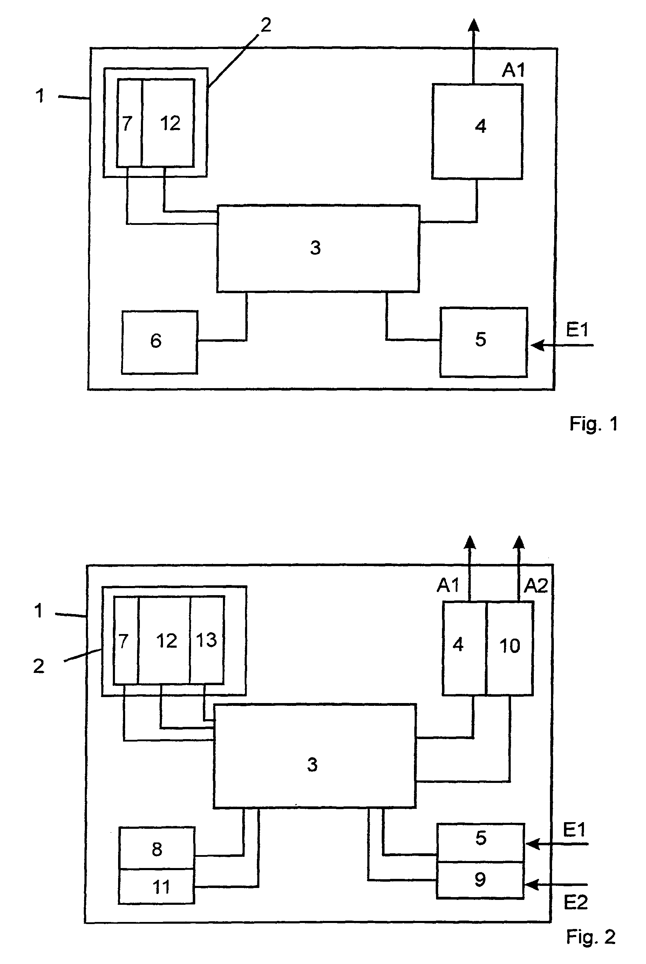

Der prinzipielle Aufbau einer beispielhaften erfindungsgemäßen TV-Fernbedienung ist in Fig. 1 dargestellt.

Die Vorrichtung umfasst eine Eingabeeinrichtung 2 in Form von Tasten 12, eine Steuer- und Verarbeitungseinrichtung 3 sowie eine Infrarotsendeeinrichtung 4. Die mittels der Tasten eingegebenen Befehle zur Steuerung eines zugeordneten und nicht dargestellten Fernsehers werden von der Steuer- und Verarbeitungseinrichtung aufbereitet und an den Infrarotsender 4 weitergeleitet, welcher ein Ausgangssignal A1 zum Fernseher abgibt. Mit der beschriebenen Einrichtung ist der Fernseher fernbedienbar, beispielsweise kann ein Programmwechsel oder eine Veränderung der Lautstärke durch Drücken der zugeordneten Tasten durchgeführt werden. Zusätzlich zu einer derartigen TV-Fernbedienung nach dem Stand der Technik umfasst die erfindungsgemäße TV-Fernbedienung eine Signalempfangseinrichtung 5 sowie eine Ausgabeeinrichtung 6, mit welcher die von der TV-Fernbedienung empfangene Information, beispielsweise ein Fernsehprogramm oder Zusatzinformation zum gerade auf dem Fernseher gezeigten Programm, visuell angezeigt werden. In der Ausführungsform weist die TV-Fernbedienung eine Infrarotempfangseinrichtung 5 zum Empfang der vom Fernseher gesendeten Videosignale E1 auf, welche die empfangenen Signale zur Steuer- und Verarbeitungseinrichtung 3 abgibt. Nach der optionalen Aufarbeitung der Daten werden die vom Fernseher empfangenen Signale an die Ausgabeeinrichtung 6, welche im vorliegenden Fall einen LCD-Bildschirm umfasst, übertragen und von diesem angezeigt. Die von einem speziellen Tuner im Fernseher an die TV-Fernbedienung gesendeten Videosignale werden dabei mittels der erfindungsgemäßen TV-Fernbedienung über deren Eingabeeinrichtung 2 ausgewählt. Sie können einerseits die Signale zur Darstellung eines zweiten, nicht auf dem Fernseher selbst gezeigten Programmes umfassen, weiterhin jedoch auch Zusatzdaten aufweisen, welche zusammen mit dem Programm vom Fernseher an die TV-Fernbedienung übertragen wurden. Ein an der Fernbedienung darzustellendes Fernsehprogramm wird dabei mittels einer dem LCD-Bildschirm der Fernbedienung zugeordneten TV-Kanal-Auswahleinrichtung 7, welche Teil der Eingabeeinrichtung 2 ist, ausgewählt. Die Zusatzdaten werden in der beschriebenen Ausführungsform in den jeweiligen Zeiträumen der Zeilenumschaltung des Videosignals übertragen. In der Steuer- und Verarbeitungseinrichtung 3 werden die überlagerten Signale getrennt und je nach Wahl des Benutzers zur Ausgabeeinrichtung weitergeführt.

Hat der Anwender z.B. die Dienste des WebTV^{®}s in Anspruch genommen, so kann der Anwender mittels der Eingabeeinrichtung 2 der TV-Fernbedienung auswählen, dass ihm auf dem Bildschirm der TV-Fernbedienung die entsprechende Zusatzinformation, beispielsweise in Form einer WWW-Seite, zum Fernsehkanal dargestellt wird, welcher mit der TV-Programm-Auswahleinrichtung ausgewählt wurde. Die Zusatzinformation kann beispielsweise nähere Angaben über die Schauspieler, den Regisseur oder die Erstellung.eines angewählten Spielfilms enthalten. Der Benutzer der erfindungsgemäßen TV-Fernbedienung kann somit seinen individuellen Informationsbedarf decken, ohne dass andere Fernsehzuschauer im gleichen Raum hierdurch gestört werden.

Das Empfangsteil (Tuner) für den Empfang weiterer TV-Programme bzw. die Zusatzinformationen muß nicht im Fernseher untergebracht sein, sondern ist in einer weiteren Ausführungsform auch selbst in der Fernbedienung untergebracht.

Eine weitere, besonders komfortable Ausführungsform der Erfindung ist in Fig. 2 dargestellt. Die Eingabeeinrichtung 2 umfasst dabei wie in der vorstehend beschriebenen Ausführungsform eine Teileinrichtung 12 zur Eingabe von alphanumerischen Zeichen und eine TV-Programm-Auswahleinrichtung 7. Hiermit kann der Anwender wieder sowohl die üblichen Bedienfunktionen am Fernseher auslösen, als auch die Zusatzinformationen oder ein anderes Fernsehprogramm vom Fernseher auswählen und abrufen, so dass diese auf dem LCD-Bildschirm 8 der TV-Fernbedienung angezeigt wird.

Die Eingabeeinrichtung weist ferner einen Trackball 13 zur Steuerung eines Cursors auf, der auf dem LCD-Display 8 angezeigt werden kann. Wird die weitere Information in Form von verschiedenen Bildschirmseiten auf dem LCD-Schirm angeboten, so können mit Hilfe der Cursorsteuerung und einer zugeordneten Taste verschiedene Unterpunkte ausgewählt werden, bzw. auf einfache Art die angebotenen Seiten durchblättert werden.

Die Ausgabeeinrichtung weist neben dem Bildschirm 8 eine Lautsprecherbuchse 11 zum Anschluß eines Kopfhörers auf. Hat der Anwender beispielsweise einen TV-Kanal für den LCD-Bildschirm der Fernbedienung angewählt, so wird ihm der Ton über den angeschlossenen Kopfhörer übermittelt, so dass die TV-Fernbedienung als zusätzlicher "Mini-Fernseher" verwendet werden kann.

Die Zusatzinformation erhält die erfindungsgemäße TV-Fernbedienung in dieser Ausführungsform nicht über den Fernseher, sondern durch eine Anbindung an das stationäre Telefonnetz. Hierzu weist die Empfangseinrichtung in ihrer Gesamtheit zwei Module 5 und 9 auf. Das erste Modul 5 ist die schon beschriebene Infrarot-Empfangseinrichtung zum Empfang der vom Fernseher gesendeten Signale E1. Das Modul 9 ist eine DECT-Empfangseinrichtung, die von einer in der Wohnung befindlichen Basisstation, welche an das Telefonnetz angeschlossen ist, die Zusatzinformation in Form von Signalen E2 erhält. Vorliegend ist eine Internet-Anbindung über das Telefonnetz für den Erhalt von Zusatzinformationen eingerichtet. Die über das Telefonnetz zur TV-Fernbedienung gesendeten Zusatzinformationen in Form von WWW-Seiten werden von der Empfangseinrichtung 9 zur Steuer- und Verarbeitungseinrichtung 3 übermittelt, welche sie wieder nach einer optionalen Überarbeitung an den Bildschirm 8 bzw. die Lautsprecherbuchse 11 zur akustischen und visuellen Darstellung abgibt.

In entsprechender Weise umfasst die erfindungsgemäße TV-Fernbedienung zwei Sendemodule 4 und 10, wobei das erste Sendemodul 4 die schon erwähnte Infrarotschnittstelle zum Fernseher ist, welche an diesen die Signale A1 abgibt. Das Sendemodul 10 ist gemäß dem DECT-Standard aufgebaut, um eine DECT-Funkverbindung zur erwähnten und nicht dargestellten Basisstation und somit zum Telefonnetz aufzubauen, mit welcher beispielsweise Informationsanforderungen A2 über das Telefonnetz abgesetzt werden können. Daraufhin werden die angeforderten Informationen über das Telefonnetz in Form der Signale E2 an die Empfangseinrichtung 9 der Fernbedienung gesendet und letztlich über die Ausgabeeinrichtung visuell und/oder akustisch dargestellt.

In einer anderen Ausführungsform der Erfindung ist eine Anbindung der Fernbedienung an ein Mobilfunk-Telefonnetz realisiert, wobei die jeweiligen Empfangs- und Sendeeinrichtungsmodule der TV-Fernbedienung je nach Ausführungsform der Erfindung nach dem GSM- oder dem neuen UMTS-Standard arbeiten.

## Patentansprüche

1. Verfahren zur Darstellung von Information an einer TV-Fernbedienung,
umfassend die Schritte:
- Auswählen wenigstens eines an der TV-Fernbedienung darzustellenden TV-Programms, welches von einem Fernsehempfänger zur TV-Fernbedienung übertragen wird;
- Empfang von Videosignalen, die wenigstens das ausgewählte TV-Programm enthalten, an der Fernbedienung;
- Darstellen des wenigstens einen in den Video-signalen enthaltenen TV-Programms
- Auswählen von Zusatzinformationen an der Fernbedienung zu dem ausgewählten TV-Programm, wobei die Zusatzinformationen durch Senden von Signalen von der TV-Fernbedienung über ein Kommunikationsnetz, insbesondere eine Telefonnetz, zu einer Zieleinrichtung ausgewählt und mittels Signalen aus dem Kommunikationsnetz an der TV-Fernbedienung empfangen werden,
- Darstellen der Zusatzinformationen auf der TV-Fernbedienung.

2. Verfahren nach Anspruch 1,
umfassend die Schritte:
- Auswählen von Zusatzinformationen an der Fernbedienung, insbesondere zu einem ausgewählten TV-Programm;
- Empfang der in den empfangenen Videosignalen codierten Zusatzinformationen an der TV-Fernbedienung;
- Decodieren der in den Videosignalen codierten Zusatzinformationen; und
- Darstellen.der Zusatzinformationen.

3. TV-Fernbedienung (1), insbesondere zur Durchführung eines Verfahrens nach Anspruch 1 oder 2 umfassend
- eine Eingabeeinrichtung (2),
- eine Sendeeinrichtung (4) zum Senden von Signalen an einen Fernseher,
- eine Einrichtung (5) zum Empfang von Videosignalen von dem Fernseher,
- eine Ausgabeeinrichtung (6) zur Darstellung von in den empfangenen Videosignalen codierten Bildern, sowie
- wenigstens eine der Ausgabeeinrichtung (6) zugeordnete TV-Programm-Auswahleinrichtung (7) zur Auswahl zumindest eines von der TV-Fernbedienung in Form von Videosignalen zu empfangenden TV-Programms
**gekennzeichnet durch**
- eine der Ausgabeeinrichtung (6) zugeordnete Zusatzinformation-Auswahleinrichtung zur Auswahl von Zusatzinformation
- eine Einrichtung (10) zum Senden von Signalen über ein Kommunikationsnetz, insbesondere ein Telefonnetz, zu einer Zieleinrichtung, um die Zusatzinformationen zu einem ausgewählten TV-Programm auszuwählen, und
- eine Einrichtung (9) zum Empfang der ausgewählten Zusatzinformationen aus dem Kommunikationsnetz.

4. TV-Fernbedienung (1) nach Anspruch 3, **dadurch gekennzeichnet, dass** die Ausgabeeinrichtung (6) einen Lautsprecher und/oder eine Lautsprecherbuchse (11) zum Anschluß eines Kopfhörers umfasst.

5. TV-Fernbedienung (1) nach Anspruch 3 oder 4 einem der, **dadurch gekennzeichnet, dass** die Eingabeeinrichtung (2) zur Steuerung eines von der Ausgabeeinrichtung angezeigten Cursors und/oder zur Eingabe von alphanummerischen Zeichen ausgebildet ist.

6. TV-Fernbedienung (1) nach einem der Ansprüche 3 bis 5, **gekennzeichnet durch** eine Einrichtung, welche die in den empfangenen Videosignalen codierte Zusatzinformationen decodiert.

7. TV-System, umfassend eine TV-Fernbedienung nach einem der Ansprüche 3 bis 6, sowie einen Fernseher mit einer Sendeeinrichtung, welche zum Senden von Videosignalen und/oder Zusatzinformationen zur TV-Fernbedienung ausgebildet ist.

8. TV-System nach Anspruch 7,
**gekennzeichnet durch**
eine Telekommunikations- Basisstation zum Senden und/oder Empfangen von Signalen zu bzw. von der TV-Fernbedienung.

## Claims

1. Method for presenting information on a TV remote control,
comprising the steps:
- selection of at least one TV channel to be presented on the TV remote control, which is transmitted from a TV receiver to the TV remote control;
- reception on the remote control of video signals containing at least the TV channel selected;
- presentation of at least the one TV channel contained in the video signals;
- selection of supplementary information on the remote control concerning the TV channel selected, whereby the supplementary information is selected by sending signals from the TV remote control via a communication network, in particular a telephone network, to a destination device and is received on the TV remote control by means of signals from the communication network;
- presentation of the supplementary information on the TV remote control.

2. Method according to claim 1,
comprising the steps:
- selection on the remote control of supplementary information, in particular concerning a selected TV channel;
- reception on the TV remote control of coded supplementary information in the video signals received;
- decoding of the coded supplementary information in the video signals; and
- presentation of the supplementary information.

3. TV remote control (1), in particular for performing a method according to claim 1 or 2, comprising
- an input device (2),
- a transmission device (4) for sending signals to a television,
- a device (5) for receiving video signals from the television,
- an output device (6) for presenting coded pictures in the video signals received, and
- at least one TV channel selection device (7), which is assigned to the output device (6), for selecting at least one TV channel to be received in the form of video signals by the TV remote control,
**characterized by**
- a supplementary information selection device for selecting supplementary information, which is assigned to the output device (6),
- a device (10) for sending signals via a communication network, in particular a telephone network, to a destination device in order to select the supplementary information concerning a selected TV channel, and
- a device (9) for receiving the selected supplementary information from the communication network.

4. TV remote control (1) according to claim 3, **characterized in that** the output device (6) comprises a loudspeaker and/or a loudspeaker socket (11) for connecting earphones.

5. TV remote control (1) according to claim 3 or 4, **characterized in that** the input device (2) is configured to control a cursor displayed by the output device and/or to enter alphanumeric characters.

6. TV remote control (1) according to claims 3 to 5, **characterized by** a device which decodes the coded supplementary information in the received video signals.

7. TV system comprising a TV remote control according to one of the claims 3 to 6, and a television with a transmission device which is configured to send video signals and/or supplementary information to the TV remote control.

8. TV system according to claim 7, **characterized by** a telecommunication base station for sending and/or receiving signals to and/or from the TV remote control respectively.

## Revendications

1. Procédé d'affichage d'informations sur une télécommande TV,
comprenant les étapes :
- sélection d'au moins un programme TV à afficher sur la télécommande TV et transmis à la télécommande TV par un récepteur de télévision ;
- réception, sur la télécommande, de signaux vidéo contenant au moins le programme TV sélectionné ;
- affichage du au moins un programme TV contenu dans les signaux vidéo ;
- sélection, sur la télécommande, d'informations complémentaires relatives au programme TV sélectionné, les informations complémentaires étant sélectionnées par l'émission de signaux depuis la télécommande TV par l'intermédiaire d'un réseau de télécommunications, notamment un réseau téléphonique, vers un équipement destinataire, et reçus sur la télécommande TV moyennant des signaux provenant du réseau de télécommunications ;
- affichage des informations complémentaires sur la télécommande TV.

2. Procédé selon la revendication 1,
comprenant les étapes :
- sélection d'informations complémentaires sur la télécommande, notamment relatives à un programme TV sélectionné ;
- réception, sur la télécommande TV, des informations complémentaires codées dans les signaux vidéo reçus ;
- décodage des informations complémentaires codées dans les signaux vidéo ; et
- affichage des informations complémentaires.

3. Télécommande TV (1), notamment pour la réalisation d'un procédé selon la revendication 1 ou 2, comprenant
- une unité d'entrée (2),
- une unité d'émission (4) pour émettre des signaux vers un téléviseur,
- une unité (5) pour recevoir des signaux vidéo du téléviseur,
- une unité de sortie (6) pour afficher des images codées dans les signaux vidéo reçus ainsi que
- au moins une unité de sélection (7) de programme TV associée à l'unité de sortie (6) pour sélectionner au moins un programme TV à recevoir par la télécommande TV sous la forme de signaux vidéo,
**caractérisée par**
- une unité de sélection d'informations complémentaires associée à l'unité de sortie (6) pour sélectionner des informations complémentaires,
- une unité (10) pour émettre des signaux par l'intermédiaire d'un réseau de télécommunications, notamment un réseau téléphonique, vers un équipement destinataire afin de sélectionner les informations complémentaires relatives à un programme TV sélectionné, et
- une unité (9) pour recevoir les informations complémentaires sélectionnées provenant du réseau de télécommunications.

4. Télécommande TV (1) selon la revendication 3, **caractérisée en ce que** l'unité de sortie (6) comprend un haut-parleur et/ou une prise de haut-parleur (11) pour la connexion d'un casque.

5. Télécommande TV (1) selon la revendication 3 ou 4, **caractérisée en ce que** l'unité d'entrée (2) est conçue pour la commande d'un curseur affiché par l'unité de sortie et/ou pour l'entrée de caractères alphanumériques.

6. Télécommande TV (1) selon l'une des revendications 3 à 5, **caractérisée par** une unité qui décode les informations complémentaires codées dans les signaux vidéo reçus.

7. Système TV comprenant une télécommande TV selon l'une des revendications 3 à 6, ainsi qu'un téléviseur doté d'une unité d'émission conçue pour l'émission de signaux vidéo et/ou d'informations complémentaires vers la télécommande TV.

8. Système TV selon la revendication 7,
**caractérisé par**
une station de base de télécommunications pour l'émission et/ou la réception de signaux à destination ou en provenance de la télécommande TV.
